Europäisches Patentamt

(19) European Patent Office

Office européen des brevets

(11) EP 0 966 882 A1

(12) EUROPEAN PATENT APPLICATION
published in accordance with Art. 158(3) EPC

(43) Date of publication:
29.12.1999 Bulletin 1999/52

(51) Int. Cl.$^6$: A01N 25/26

(21) Application number: 98900418.9

(86) International application number:
PCT/JP98/00171

(22) Date of filing: 19.01.1998

(87) International publication number:
WO 98/31221 (23.07.1998 Gazette 1998/29)

(84) Designated Contracting States:
CH DE FR GB IT LI NL

(30) Priority: 20.01.1997 JP 2102497
22.08.1997 JP 24218997

(71) Applicant: CHISSO CORPORATION
Osaka-shi, Osaka-fu 530 (JP)

(72) Inventors:
• KIMOTO, Narutoshi
Kitakyushu-shi Fukuoka 803 (JP)

• KUTSUZAWA, Yoshiya
Chiba 290-05 (JP)
• TAKAHASHI, Atsushi
Kitakyushu-shi Fukuoka 803 (JP)

(74) Representative: HOFFMANN - EITLE
Patent- und Rechtsanwälte
Arabellastrasse 4
81925 München (DE)

(54) UNCOATED AGRICULTURAL CHEMICAL GRANULES, AND COATED AGRICULTURAL CHEMICAL GRANULES CONTROLLED IN RELEASE TIMING

(57)     A first invention relates to pesticidal granules for coating characterized by comprising at least one pesticidally active ingredient as an effective component and having a circularity coefficient of 0.7 or over when determined according to the following calculation equation, and also to a coated granular pesticide wherein the pesticidal granules are coated with a film mainly composed of a resin.

circularity coefficient = (4π × projected area of a granule)/(profile length in a granule projection drawing)$^2$

The second invention relates to a coated granular pesticide of a timed-release control-type wherein pesticidal granules having a welling force of 1 - 30 ml/2 g on absorption of water and coated with a coating material comprising a thermoplastic resin as its effective component. The coated granular pesticide has an excellent initial release suppression function and an initial release stability function.

Fig. 2

EP 0 966 882 A1

## Description

Technical Field

This invention relates to pesticidal granules for coating having a specific shape, a coated granular pesticide using the same and mixtures of the coated granular pesticides, further to a method for cultivating field crops by use of the coated granular pesticide, and also to a timed-release control-type coated granular pesticide wherein pesticidal granules whose swelling force ranges 1 - 30 ml/2 g are covered, on the surfaces thereof, with a coating material comprising a thermoplastic resin as its effective component.

Technical Background

In a recent agricultural environment where the farming population is reduced along with advanced age, it has been long accepted, as a matter of urgent necessity, how to save labor in the cultivation and management of field crops. The control, which is one of the most important works in the cultivation and management, can be broadly classified into a control against disease and insect damages and a control against weeds. For the control work, it is necessary to appropriately spray/apply pesticides effective for intended disease injury/weed throughout the period of cultivation. Usually, a control system is established through spraying/application carried out several times.

The spraying/application work of pesticides needs much labor because of the great number of the works and the diversity in kind of pesticides. With paddy-rice plants, for example, there are used chemicals including those chemicals for seed disinfection at the stage of seeding and germination, chemicals used against rice blast, rice water weevil, rice leafhoppers/planthoppers, sheath blight, stinkbugs and the like, and herbicides used against barnyard millet and wide-leaf weeds. In this way, the control work is very great in kind and number, thus impeding the establishment of a labor-saving cultivation system.

Under these circumstances, it has occurred to the present inventors that an ideal labor-saving control method using chemicals is one wherein spraying/application of various types of pesticides performed several times during the period of cultivation can be conducted only once, particularly at the time of seeding or transplanting of seedlings.

In order to realize this control method, it is necessary to provide a granular pesticide which has the capability of suppressing different types of pesticides from dissolving-out or release (hereinafter referred to as "release") in an environment and commencing quick release of pesticidally active ingredients when the time has arrived, and has the function of continuing the release of the pesticidally active ingredients during the course of a necessary period.

More particularly, there is required a granular pesticide having a so-called timed-release control-type slow release function (hereinafter referred to as "timed-release function") which includes a time of suppressing the release of pesticidally active ingredients in an environment over a given period after application thereof (hereinafter referred to as "release suppression time), and a time during which the release of the pesticidally active ingredients in the environment is commenced after lapse of the given period, and is then completed (hereinafter referred to as "ingredient release time")

The slow release of pesticidally active ingredients has been conventionally realized principally by granulating pesticides into pesticidal granules. In general, there are known three methods of manufacturing pesticidal granules including (1) an extruding granulation method wherein pesticidally active ingredients, binders and, if necessary, various types of adjuvants are added to mineral fine powder and kneaded along with water, followed by extrusion through a fine orifice and drying to provide granules, (2) an impregnation method wherein liquid pesticidally active ingredients are impregnated in inert granules made of minerals, and (3) a coating method wherein pesticidally active ingredients are attached to the surfaces of inert granules made of minerals by means of binders. These methods are properly selected depending on the field of utility thereby preparing pesticidal granules.

However, the thus prepared pesticidal granules are disadvantageous in that pesticidally active ingredients are released in an environment within a relatively short time after application. Accordingly, when pesticidal granules having such a release control function as mentioned above are applied, the concentration of the pesticidally active ingredients in the environment temporarily suffers an abrupt rise at the time of the application, thereby presenting the problem that chemical injury takes place. Hence, the use of such pesticidal granules would make it difficult to establish an ideal labor-saving control method as set out before.

In recent years, there are disclosed, in Japanese Laid-open Patent Application No. Hei 6-9303, a coated granular pesticide wherein pesticidal granules are individually covered with a multi-layered film made of a highly water-absorbable, swelling material layer and an olefin polymer layer, in Japanese Laid-open Patent Application No. Hei 6-9304, a coated granular pesticide wherein pesticidal granules are covered with a multilayered film made of a layer of an alkaline material, a layer of a mixture composed of an olefin polymer resin and an aqueous alkali-soluble polymer, in Japanese Laid-open Patent Application No. Hei 6-72805, a coated granular pesticide wherein pesticidal granules are covered with a multi-layered film made of a layer of an alkaline material and a layer of a mixture composed of a condensed polymer and an aqueous alkali-soluble polymer, and, in Japanese Laid-open Patent Application No. Hei 6-80514, a coated granular pesticide wherein pesticidal granules are covered with a multi-layered film made of a highly water absorbable, swelling material layer and a condensed polymer layer. These are all composed of coated granular pesticides of the timed-release control-type having a slow release function (hereinafter referred to as "timed-release coated granular pesticide") and are considered as prospecting for use as an article which is able to realize such an ideal labor-saving control method as stated hereinbefore.

Since such timed-release coated granular pesticides as diScussed above have a given release-suppression time, they can be applied to fields and the like, simultaneously with seeding, in amounts larger than a mere slow release-type coated pesticide disclosed, for example, in Japanese Patent Publication No. Sho 64-5002. However, there has never been known currently employed timed-release coated granular pesticides which can completely suppress the release of pesticidally active ingredients in the course of a release-suppression time. More particularly, conventional granular pesticides invariably permit a slight degree of release of pesticidally active ingredients in an environment during a given release-suppression time and, in other words, allows leakage of the active ingredients (hereinafter referred to as "leakage"). This will cause growth troubles (chemical injury) when the timed-release coated granular pesticides are applied to in large amounts simultaneously with seeding or transplanting of seedlings. Thus, it is impossible that a coated granular pesticide, which contains a whole amount or a major proportion of pesticidally active ingredients to be required within a period of from seeding to harvesting, are applied to at one time simultaneously with seeding or transplanting of seedlings. For this reason, drastic labor saving on pesticide application work has never been realized yet. That is, where pesticides have an incomplete timed-release function, the application of such pesticides at one time involves some danger, thus impeding the realization of an ideal labor-saving control method in practice.

Especially, in the cultivation of field crops, whether growth at an initial stage of cultivation is good or not greatly influences a harvest as it has been accepted from old that "rice plants are a fifty percent crop", so that such a danger as mentioned above should be fully avoided. Moreover, any failure is not usually permitted, particularly, in such annual crops as paddy-rice plants.

Under these circumstances, the problem involved in the establishment of a labor-saving cultivation method is how to develop a technique of improving the release-suppression function of timed-release coated granular pesticides or a technique for reducing, completely or to a minimum, the leakage of pesticidally active ingredients in an environment during the release-suppression time. This problem is severe in the timed-release coated granular pesticides, and in the case of coated granular pesticides which have no release-suppression time but have the slow release function of slowly releasing pesticidally active ingredients in an environment of their application at the time of spraying/application, another problem is brought about in that an initial releasing amount is not stable.

The coated granular pesticides disclosed in the afore-mentioned Japanese Laid-open Patent Application Nos. Hei 6-9303, 6-9304, 6-72805 and 6-80514 have the slow release function of the timed release type, but all of the pesticides, respectively, have coatings of multilayered films. Accordingly, their manufacture requires a greater number of manufacturing steps than a case of manufacture where a single-layered film is coated, thus apparently resulting in higher costs. Even if a timed-release control function of high grade is realized and labor-saving for the control is achieved by use of such a pesticide, it is difficult to put into practice a granular pesticide which is high in cost, and thus, imposes an great economical burden.

Accordingly, pesticides which meet requirements for putting such timed pesticides into practice include ones which are relatively inexpensive and which have the timed-release control function that allows arbitrary controllability with respect to the time at which any pesticidally active ingredients are not released after application thereof and also to the time of the release after a lapse of the first-mentioned time. The development of this technique is strongly demanded by many farmers.

DISCLOSURE OF THE INVENTION

We made intensive studies in order to cope with the problems involved in the prior art, and as a result, found that pesticidal granules, which comprises pesticidally active ingredients as an effective component and which has a circularity coefficient of 0.7 or over when determined according to the following calculation equation, are favored for the purpose of the invention. Further, it has also been found that when the pesticidal granules are coated with a resin, initial release of pesticidally active ingredients is stabilized and that the release of the pesiticidally active ingredient in an environment of application in the course of a release-suppression time of a timed-release coated granular pesticide can be significantly reduced.

Circularity coefficient = $(4\pi \times$ projected area of granule$)/($profile length in a granule projection drawing$)^2$

Moreover, it has been further found that when the coated granular pesticides, used singly or in admixture, are used for cultivating crops, the spraying/application work of the pesticide can be remarkably mitigated. A first invention has been accomplished based on these findings.

We have made further studies on timed-release control-type coated granular pesticides wherein pesticidal granules having a swelling force of 1 - 30 ml/2 g when absorbing water therein are individually covered with a film comprising a thermoplastic resin as its effective component. We have found that the pesticidal granules enable one to have a time at which pesticidally active ingredients are not released over a given time after their application to fields and a time at which the pesticidally active ingredients are released after the lapse of the given time. In addition, it has been found that the release-suppression time and the ingredient release time can be, respectively, controlled arbitrarily and independently and that the film may be made of a single-layered film which is readily coated in a simple way. A second invention has been accomplished based on these findings.

More particularly, the invention is so embodied as in (1) - (11) below.

(1) Pesticidal granules for coating which comprise at least one pesticidally active ingredient as an effective component and has a circularity coefficient of 0.7 or over when determined according to the following calculation equation

Circularity coefficient = $(4\pi \times$ projected area of granule)/(profile length in a granule projection drawing)$^2$.

(2) A coated granular pesticide wherein the pesticidal granules for coating as set out in (1) above are covered with a resin film.
(3) A coated granular pesticide as set out in (2) above which have the slow release function of the timed-release control-type that permits a release-suppression time during which pesticidally active ingredients are suppressed from release over a given period after application thereof and a release time during which the release of the pesticidally active ingredients is continued after passage of the given period of time.
(4) A mixture of coated granular pesticides consisting of two or more coated granular pesticides selected from the coated granular pesticides set out in (2) above and the coated granular pesticides set out in (3) above.
(5) A method for cultivating field crops comprising applying coated granular pesticides set out in (2) or (3) above or the mixed coated granular pesticide set out in (4) above.
(6) A timed-release control-type coated granular pesticide wherein pesticidal granules having a swelling force of 1 - 30 ml/2 g on absorption of water are coated with a coating material comprising a thermoplastic resin as its effective component.
(7) A timed-release control-type coated granular pesticide wherein the pesticidal granules set out in (6) above comprise at least one pesticidally active ingredient and at least one water-swelling material.
(8) A timed-release control-type coated granular pesticide wherein the water-swelling material set out in (7) above consists of a clay mineral mainly composed of montmorillonite.
(9) A timed-release control-type coated granular pesticide wherein the thermoplastic resin set out in any of (6) - (8) above consists of an olefin resin.
(10) A tinted-release control-type coated granular pesticide wherein the coating material set out in any of (6) - (8) above contains 15 wt% or below of an ethylene/vinyl acetate copolymer.
(11) A timed-release control-type coated granular pesticide wherein the coating material set out in any of (6) - (8) above comprises a water-insoluble and/or hardly soluble powder dispersed therein.

The coated granular pesticide according to the first invention, in which pesticidal granules having a circularity coefficient of 0.7 or over are covered with a resin film on the surfaces thereof, has the effect of stabilizing initial release of pesticidally active ingredients. Further, the coated granular pesticide having the slow release function of the time-released control type has an excellent timed-release function wherein leakage of pesticidally active ingredients is significantly suppressed during the course of a release-suppression time.
Since the coated granular pesticide of the invention exhibits stable initial dissolution and is suppressed from leakage of pesticidally active ingredients during the release-suppression time, any growth trouble (chemical injury) is not caused at an initial stage of cultivation when a whole mount or a major proportion of pesticidally active ingredients necessary for the cultivation time it applied to at one time simultaneously with seeding or transplanting. Likewise, a mixture obtained by mixing two or more coated granular pesticides of the invention does not cause any chemical injury, thus ensuring reduction in number of sprayings/applications to remarkably mitigate works therefor.
The coated granular pesticide of the second invention is able to release pesticidally active ingredients at an arbitrary time, and thus, has the following effects.

(1) When applied to, uncoated pesticides of the conventional type are in contact with water, under which pesticidal ingredients comence to be released immediately. In contrast, when using a coated granular pesticide of the invention, the timed-release control is so enabled that pesticidally active ingredients can be suppressed from release over a given period.

(2) With the coated granular pesticide of the invention, pesticidally active ingredients are released through disintegration thereof. Accordingly, the control of release is possible when pesticidally active ingredients are hardly soluble in water.

(3) The timed-release control is possible even on use of a single-layered film capable of coating by an easy and simple coating method, and a release-suppression time and an ingredient release time can be arbitrarily and independently controlled.

(4) Hence, when using the product of the invention, labor saving in field work can be achieved to a substantial extent.

Brief Description of the Drawings

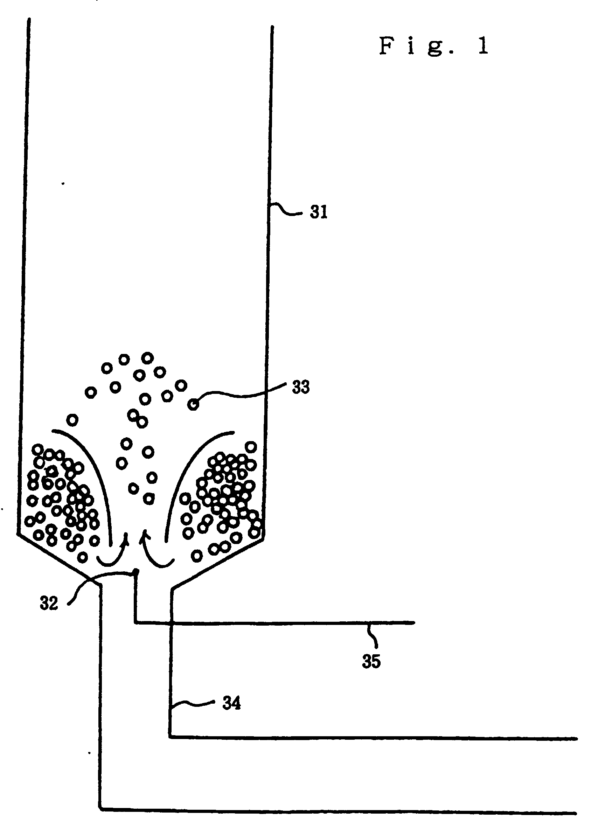

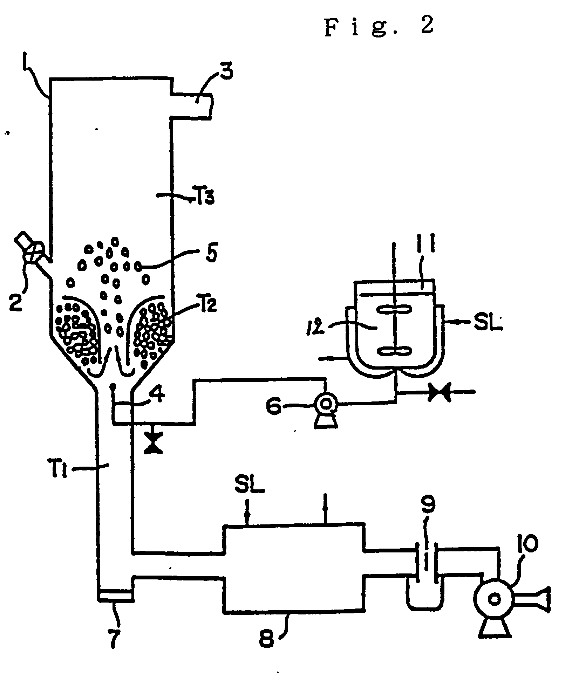

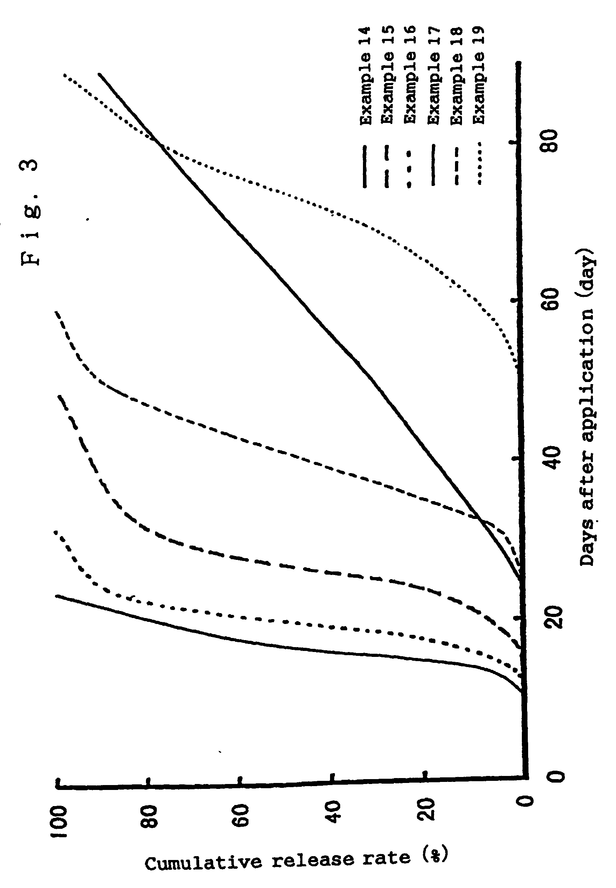

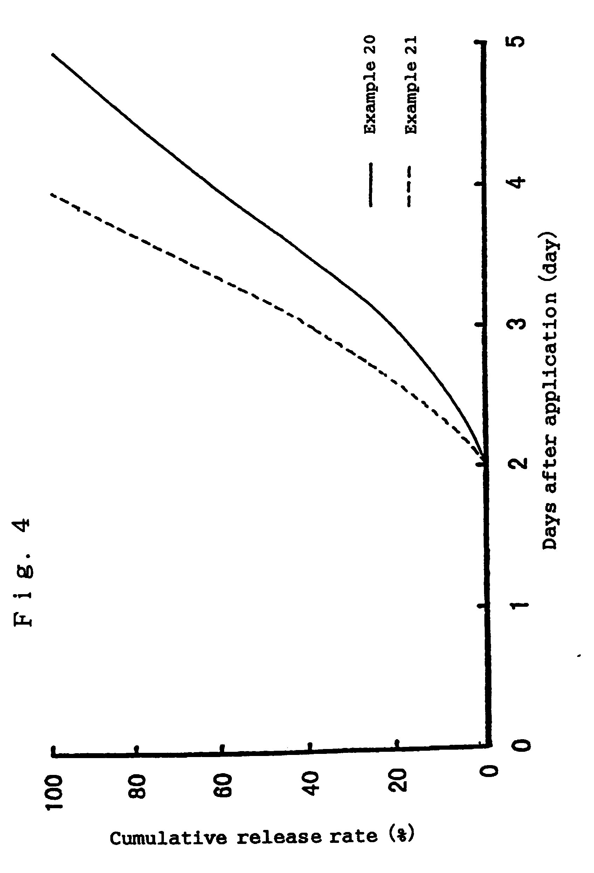

Fig. 1 is a schematic view of an arrangement shoving an example of a spouting column used to carry out a first invention. Fig. 2 is a schematic view of an arrangement showing an example of a spouting column used to carry out a second invention. Fig. 3 is a discharge characteristic graph of Examples 14 - 19 (20°C in water). Fig. 4 is a discharge characteristic graph of Examples 20 - 21 (20°C in water).

31 spouting column, 32 spray nozzle, 33 pesticidal granules for coating (pesticidal particles for coating), 34 hot gas, 35 pipe, 1 spouting column, 2 charge port for core material, 3 outlet for exhaust gas, 4 spray nozzle, 5 core material (pesticidal granules), 6 pump, 7 discharge port, 8 heat exchanger, 9 orifice flowmeter, 10 blower, 11 dissolution tank, 12 mixed solution of coating materials, T1 hot gas temperature, T2 temperature of core material, T3 exhaust gas temperature, SL steam

Best Mode for Carrying Out the Invention

(First Invention)

The first invention is directed to pesticidal granules for coating which comprise at least one pesticidally active ingredient as an effective component thereof and has a specific shape, and also to a coated granular pesticide wherein the pesticidal granules are covered with a resin film. The first invention is initially described in detail.

The pesticidal granules for coating according to the first invention are covered on the surfaces thereof with a coating material for the purpose of slow release of pesticidally active ingredients. The pesticidal granules for coating has a circularity coefficient of 0.7 or over, preferably 0.75 or over, and more preferably 0.8 or over when determined according to the afore-indicated calculation equation. The maximum value of the circularity coefficient is at 1. As the value comes closer to 1, the leakage of pesticidally active ingredients to an application environment can be more suppressed in the course of a release-suppression time.

The circularity coefficient means a measure, from which a degree of circularity of granules is known. Where granules are completely spherical in shape, the circularity coefficient is at 1. As the shape of granules stands away from the complete sphere, the circularity coefficient becomes smaller. In the practice of the invention, if a ratio of granules whose circularity coefficient is less than the lower limit increases, the leakage during the release-suppression time becomes greater. In this sense, all of the pesticidal granules for coating of the invention should preferably have a circularity coefficient of 0.7 or over. However, granules having a circularity coefficient smaller than the lower limit may be present in small amounts provided that the advantages of the invention are not impeded significantly.

It will be noted that the circularity coefficient can be measured by use of a commercially available measuring instrument such as of PIAS-IV (PIAS Co., Ltd.)

The pesticidal granules for coating of the first invention can be obtained by granulating a starting material which comprises pesticidally active ingredients as its essential component. The granulation method include an extruding granulation method, a coating granulation method, an adsorption granulation method or the like. In the practice of the invention, any of these granulation methods may be used.

In general, the pesticidal granules obtained by the extruding granulation method, coating granulation method, adsorption granulation method or the like are not smooth on the surfaces thereof as they are, but are, in most cases, in an angled and irregular shape. Accordingly, where the above-mentioned methods are used, angle cutting using a shaping machine is further effected with care so that the granules are shaped as having a circularity coefficient of 0.7 or over.

The composition of the pesticidal granules for coating of the first invention is not particularly critical provided that pesticidally active ingredients are contained as an effective component. The pesticidal granules for coating may be ones which are made of pesticidally active ingredients alone, or made of pesticidally active ingredients and inert carriers. Furthermore, the pesticidally active ingredients may be ones which are made of a component alone, or made of two or more mixed components.

The inert carrier includes bentonite, zeolite, talc, clay, calcium carbonate, diatomaceous earth or the like but is not limited to those indicated above. The inert carriers may be used by mixing two or more, if necessary.

Further, the pesticidal granules for coating of the first invention may further contain fertilizer ingredients other than the pesticidally active ingredients, and may further contain binders, if necessary.

The binders used in the pesticidal granules of the first invention may be ones selected from known materials. There may be used gum arabic, carboxymethylcellulose, hydroxyethylcellulose, ligninsulfonates, polyvinyl alcohol, polyethylene glycol, surface active agents, liquid paraffin as required.

The pesticidal granules for coating may be classified into an arbitrary size by use of a sieve. The size is preferably at 0.3 mm or over, more preferably 0.7 - 5 mm. With the granules having a size smaller than 0.3 mm, a difficulty is involved in coating thereof with a film, and the above defined size is preferred from the standpoint of the manufacture and practical applications. These granulation methods may be carried out according to any known procedures, among which an extruding granulation method is simplest.

Pesticidally active ingredients are not limited to specific ones and may include those having, aside from insecticidal, fungicidal, herbicidal and plant growth regulating actions, miticidal, nematicidal and the like actions. Moreover, the ingredients may further include repellents, attractants and the like. The pesticidally active ingredients should preferably be in the form of solids at normal temperatures, and pesticidally active ingredients which are liquid at normal temperatures may also be usable. The pesticidally active ingredients are not critical with respect to the degree of water solubility. Specific examples of the pesticidally active ingredients usable in the practice of the invention are indicated below, which are indicated by way of examples and should not be construed as limitation thereof.

Examples include 1-(6-chloro-3-pyridylmethyl)-N-nitroimidazolidin-2-ylideneamine), O,O-diethyl-S-2-(ethylthio)ethylphosphorodithioate, 1,3-bis(carbamoylthio)-2-(N,N-dimethylamino)propane hydrochloride, 2,3-dihydro-2,2-dimethyl-7-benzo[b]furanyl=N-dibutylaminothio-N-methyl carbamate, (2-isopropyl-4-methylpyrimidyl-6)-diethylthiophosphate, 5-dimethylamino-1,2,3-tricyan oxalate, O,O-dipropyl-O-4-methylthiophenyl phosphate, ethyl=N-[2,3-dihydro-2,2-dimethylbenzofuran-7-yloxycarbonyl(methyl)aminothio]-N-isopropyl-β-alaninate, 1-naphthyl-N-methyl carbamate, 2-isopropoxyphenyl-N-methyl carbamate, diisopropyl-1,3-dithiolan-2-ylidene malonate, 5-methyl-1,2,4-triazolo[3,4-b]benzothiazole, 1,2,5,6-tetrahydropyrolo[3,2,1-ij]quinolin-4-one, 3-allyloxy-1,2-benzoisothiazole-1,1-dioxide, a sodium salt, dimethylamine salt or ethyl ester of 2,4-dichlorophenoxyacetic acid, a sodium salt or ethyl or butyl ester of 2-methyl-4-chlorophenoxyacetic acid, a sodium salt or ethyl ester of 2-methyl-4-chlorophenoxybutyric acid, α-(2-naphthoxy)propionanilide, S-1-methyl-1-phenylethyl=piperidin-1-carbothioate, S-(4-chlorobenzyl)-N,N-diethylthiocarbamate, 5-tertiary-butyl-3-(2,4-dichloro-5-isopropoxyphenyl)-1,3,4-oxadiazolin-2-one, 2-[4-(2,4-dichlorobenzoyl)-1,3-dimethylpyrazol-5-yloxy]acetophenone, 4-(2,4-dichlorobenzoyl)-1,3-dimethyl-5-pyrazolyl-p-toluenesulfonate, 3-isopropyl-2,1,3-benzothiadiazinon-(4)-2,2-dioxide or its sodium salt, 2-chloro-4-ethylamino-6-isopropylamino-s-triazine, 2-methylthio-4-ethylamino-6-(1,2-diemthylpropylamino)-s- triazine, 2-methylthio-4,6-bis(ethylamino)-s-triazine, 2-methylthio-4,6-bis(isopropylamino)-s-triazine, 1-(α,α-dimethylbenzyl)-3-para-tolyl)urea, methyl=α-(4,6-dimethoxypyrimidin-2-ylcarbamoylsulfamoyl)-o-toluate, 2-benzothiazol-2-yloxy-N-methylacetoanilide, 1-(2-chloroimidazo[1,2-a]pyridin-3-ylsulfonyl)-3-(4,6-dimethoxypyrimidin-2-yl)urea, S-benzyl=1,2-dimethylpropyl(ethyl)thiocarbamate, 2-chloro-N-(3-methoxy-2-tenyl)-2',6'-dimethylacetoanilide and the like.

The material of a film coating the pesticidal granules for coating of the first invention is not critically limited. In view of the length in total release time of pesticidally active ingredients, the width in range of selection in a release pattern and the physical properties such as film strength, the film should preferably consist of a resin film.

The resins used in the present invention include one or more materials selected from olefin polymers, copolymers containing vinylidene chloride, diene polymers, waxes, petroleum resins, natural resins, and oils and fats and modified products thereof, and thermosetting resins such as alkyd resins.

Examples of the olefin polymers include polyethylene, polypropylene, ethylene-propylene copolymer, ethylene-carbon monoxide copolymer, polybutene, butene-ethylene copolymer, butene-propylene copolymer, polystyrene, ethylene-vinyl acetate copolymer, ethylene-vinyl acetate-carbon monoxide copolymer, ethylene acrylic acid copolymer, ethylene methacrylate copolymer and the like.

Examples of the copolymers containing vinylidene chloride include vinylidene chloride-vinyl chloride copolymer.

Examples of the diene copolymer include butadiene polymer, isoprene polymer, chloroprene polymer, butadiene-styrene copolymer, EPDM polymer, styrene-isoprene copolymer and the like.

Examples of the waxes include beeswax, Japan wax, paraffin and the like.

Examples of the natural resins include natural rubber, rosin and the like. Examples of the oils and fats and modified products thereof include hardened products, solid fatty acids, metal salts and the like.

From the standpoint of the length of the total release time and the width in range of selection of a release pattern, olefin polymers are preferred.

The thickness of a film covering the pesticidal granules for coating should preferably range 1 - 100 μm.

In the first invention, fillers and surface active agents for imparting hydrophilicity may be added to resins in amounts not impeding the advantages of the invention. Examples of the fillers include talc, clay, kaolin, bentonite, muscovite, phlogopite, mica-shaped iron oxide, metal oxides, silicates, glass, and carbonates, sulfates and starch of alkaline earth metals. The amount of a filler is not critical, and its content is preferably in the range of 5 - 98 wt%. From the standpoint of the film strength and the keep of release function, it is not favorable that the content is excessively lover or higher than the range.

The surface active agents are not limited to specific ones. Although depending on the kind of surface active agent, too great an amount of surface active agents added to resins is liable to cause cracks in the resin. Accordingly, the amount in maximum should preferably be 20 wt% or below in the film.

Where the coated granular pesticide using the pesticidal granules for coating of the first invention consists of a timed-release coated granular pesticide, the leakage of pesticidally active ingredients in the release-suppression time can be remarkably suppressed and is particularly effective for labor-saving on application of pesticide. The use of the timed-release coated granular pesticide of the invention enables one to realize such an ideal labor-saved control method as set out hereinbefore.

In the first invention, the slow release function of the timed-release control-type means a function which is able to realize a release pattern consisting of a release-suppression time of suppressing pesticidally active ingredients from being released for a given time after application thereof and an ingredient release time of quickly commencing the release after lapse of the given time. More particularly, if a period before pesticidally active ingredients in a coated granular pesticide are released in amounts of 10 wt% in an external environment after its application is determined as the release-suppression time and a time during which they are released in amounts of greater than 10 wt% to 90 wt% is determined as the ingredient release time, the function means a function of realizing such a release pattern that the ratio of the release-suppression time/the ingredient release time is 0.2 or over.

Because pesticides are more sparingly soluble in water than fertilizers, the release of pesticidally active ingredients inside the film to the outside of the film is achieved, as disclosed in the afore-discussed prior art literature, by causing the film to be broken or dissolved thereby permitting the pesticidal granules inside the film to be directly exposed to the outside environment (soil, water and the like). In the practice of the invention, any functional mechanism of realizing such a timed-release function may be adopted.

In the present invention, the timed-release function may be imparted to pesticidal granules by covering pesticidal granules with a film which has a composition disclosed in the afore-indicated prior art literature. In this connection, however, the film disclosed in the prior art literature is constituted of a double-layered film layer. Taking into account the complication of coating operations for forming such a double-layered film and the costs of equipment investment for manufacturing facilities, the film should preferably be made of one layer.

Mention is made, as a coated granular pesticide capable of achieving the timed-release function by use of a one-layered film, of a coated granular pesticide wherein pesticidal granules comprising at least one pesticidally active ingredient and at least one water-swelling material is coated on the surface thereof with a resin film. Where the coated granular pesticide of this type is applied to fields and the like, the film is permeable in nature, so that moisture supplied to the field enters into the inside of the coated granular pesticide to act on the water-swelling material, resulting in the commencement of swelling of the pesticidal granules. The film is broken after lapse of a given period of time depending on the stress caused by the swelling of the water-swelling material. Thus, the pesticidally active ingredients covered with the film are directly exposed to an outside environment (soil, water and the like) of the film.

The water-welling materials include all types of materials whose volume increases by absorption of water and are not critical. Examples include clay minerals mainly composed of montmorillonite, starch, water-absorbing polymers and the like. Of these, clay minerals composed mainly of montmorillonite are preferred from the standpoint of cost and ease in handling.

Typical examples of smectite clay which comprises clay mineral montmorillonite as its primary component include bentonite. The bentonite is in the form of powder which is finest among various types of clays, and because of its high activity, it is the most preferable material for use as a water-swelling material of the present invention.

In the first invention, there may be formulated, aside from the pesticidally active ingredients and water-swelling materials, various types of auxiliary ingredients such as, for example, granulation aids (containing clay minerals not mainly composed of montmorillonite), binders, surface active agents, chemical injury mitigating agents, and the like.

In order to realize the timed-release function by use of a one-layered film, it is necessary that pesticidal granules for coating be completely covered with such a resin film as set out before in such a way that water vapor is able to be permeated, but water is incapable of being passed through the film. That is, it is important to form a film having no pinholes or cracks. Where a long release-suppression time is necessary, it is effective to cover pesticidal granules for coating, on the surfaces thereof, with a resin film which allows small moisture permeability. The coverage with a resin film having small permeability permits water vapor existing in outside to be infiltrated to the pesticidal granules covered with the film gradually over a long time.

The resins of small permeability are not critical in type and preferably include olefin polymer, copolymers containing vinylidene chloride, and the like. More particularly, preferable resin materials include polyethylene, polypropylene, ethylene-propylene copolymer, ethylene-carbon monoxide copolymer, and vinylidene chloride-vinyl chloride copolymer.

If rubbery materials such as ethylene-vinyl acetate copolymer, ethylene-vinyl acetate-carbon monoxide copolymer, and diene polymers are formulated in a coating material, it is effective to control a time before the film suffers cracks. However, when these rubbery materials are formulated in a coating material in large amounts, the release-suppression time becomes extremely shortened, with some possibility that no crack is formed. The amount of these polymers in the coating material should preferably be smaller than 20 wt%. Especially, when an ethylene-vinyl acetate copolymer is formulated, its content should preferably be 15 wt% or below.

The main factor with which the ingredient release time is determined is a swelling force of pesticidal granules for coating. If the film strength is at a given level, there is the tendency that a greater swelling force leads to a shorter ingredient release time, and a smaller swelling force results in a longer ingredient release time.

The functional mechanism of the release pattern attained by use of the pesticidal granules for coating of the invention is not known at the present stage, and the reason for this is assumed that when using the pesticidal granules for coating of the invention, a film of a uniform thickness is likely to be formed on the surfaces of the granules.

As stated before, pesticides are more hardly soluble in water than fertilizers, so that the release of the pesticidally active ingredients inside the film to outside is achieved, as disclosed in the afore-indicated prior art literature, by breaking or dissolving the film. Where the timed-release coated granular pesticide whose film is broken and whose individual films have different thicknesses, a stress with which the film is broken is concentrated at a thin portion of the film when the pesticidal granules are swollen. As a result, the portion is broken before arriving at a given release-suppression time. Eventually, the leakage of the pesticidally active ingredients is liable to occur.

It is considered that with the case of hitherto known timed-release coated granular pesticide of the film dissolution type, a path communicating the inside of the film with outside is likewise formed at a thin portion of the film at a relatively early stage, under which the leakage Is liable to occur. More particularly, it is considered that if a film with a uniform thickness is formed on the surfaces of pesticidal granules, the leakage within a release-suppression time can be prevented.

In order to cope with the problem on the leakage within a release-suppression time, a simply thick film can be used, with the tendency that the occurrence of the leakage is reduced. However, a thicker film correspondingly leads to a longer release-suppression time. As a consequence, the range of controlling the release-suppression time becomes narrow, thus such being not a practically useful method.

In contrast, the formation of a film with a uniform thickness enables one to suppress, completely or to a minimum, the release of pesiticidally active ingredients within a release-suppression time when using a timed-release coated granular pesticide having a short timed-release-suppression time. Accordingly, the use of the pesticidal granules of the invention on which a film with a uniform thickness can be covered is believed to be a very effective measure for the manufacture of timed-release coated granular pesticides.

The film coating method of the invention is not critical. There may be used a method of forming a film wherein pesticidal granules for coating of the invention, which is in a tumbled state, fluidized state or jetted state, are sprayed or applied with a dissolved or molten coating material, followed by drying or solidifying. Alternatively, there may be used a method of forming a film wherein pesticidal granules for coating are immersed in a dissolved or molten liquid coating material. Still alternatively, there may also be used a method of forming a film wherein a material, which is passed through a liquid coating material and attached therewith on the surfaces of granules, is dried or solidified.

For a preferred instance, mention is made of a method wherein while a mixed solution dissolving coating materials composed mainly of resins in an organic solvent is sprayed over pesticidal granules for coating being in a fluidized state, the solvent is removed from the surfaces of the pesticidal granules in a high-speed stream of hot gas to dry the granules, thereby coating the pesticidal granules with the coating material.

An example of a coating apparatus usable in the manufacturing method is described with reference to the accompanying drawings. The coating of the pesticidal granules for coating of the first invention is most preferably performed by use of a spouting column shown in Fig. 1. In the coating apparatus, in order to uniformly disperse a coating material, it is necessary to vigorously agitate a coating solution.

In a spouting column 31, a mixed solution (coating solution) of coating materials is sprayed by use of spray nozzle 32 over pesticidal granules 33 for coating in a tumbled or fluidized state, so that while the pesticidal granules 33 for coating are coated with the mixed solution on the surfaces thereof, a hot gas 34 is, at the same time, charged from the lower portion of the spouting column 31. As a result, the solvent attached to the surfaces and contained in the mixed solution is instantaneously evaporated for drying by means of the high-speed stream of hot gas. It will be noted that the mixed solution is transported via a pipe 35 and supplied to the spray nozzle 32.

The timed-release coated granular pesticide of the invention, which acts to suppress the leakage of pesticidally active ingredients in the course of a release-suppression time, enables the pesticidally active ingredients to be free from the release thereof or to be released in small amounts at the stage of raising or seedling when seedlings are apt to suffer chemical injury. Accordingly, the whole amount or a major proportion of pesticidally active ingredients, which should be sprayed/applied to during the period of cultivation, can be applied to at one time at the stage of commencing rearing of seedling, or seeding or transplanting to fields.

During the time of commencing cultivation to harvesting, field crops are attacked with various types of diseases and insect pests and are subjected to a struggle of nutrients with weeds. The outbreak time of diseases, insect pests and weeds completely differs depending on the types thereof, and the types of pesticides differ correspondingly. Accordingly, in order to apply pesticidally active ingredients necessary in the course of the cultivation stage at an initial stage of commencing the cultivation thereby effectively developing the activity of the pesticidally active ingredients against a variety of diseases, insect pests and weeds whose stages of occurrence differ from one another, it is preferred to use a mixture of a variety of coated granular pesticides comprising pesticidally active ingredients which are different in release-suppression time and type.

In the cultivation of a paddy-rice plant, for instance, with Toyama Prefecture, rice water weevil, rice leaf beetle and the like come out at the rooting stage, and white-backed planthopper, green rice leafhopper, stinkbugs and the like break out at the boot stage. For the application of all insecticides having activities against these insect pests to a nursery box at the commencement of rasing seedling, it is sufficient to use a mixture of pesticidal granules having a release-suppression time covering from the commencement of rasing seedling to a rooting stage, and pesticidal granules having a release-suppression time covering up to the boot stage.

In this way, a mixture of two or more of the timed-release covered granular pesticides of the invention is very effective for labor-saving in application of pesticides.

Those described above relate to mixtures consisting of the timed-release coated granular pesticides of the invention, and, if necessary, coated granular pesticides of the invention which have no release-suppression time may be mixed. The latter mixture is effective in the case where it is applied to at the time of transplanting of seedlings to field. It will be noted that since seedlings are usually damaged immediately after transplanting and are apt to suffer chemical injury, an amount and an initial degree of release of pesticidally active ingredients should be carefully determined.

The coated granular pesticide mixture of the invention may further comprise pesticidally active ingredients of other shapes, fertilizer ingredients, soil improvers and the like in amounts not impeding the advantages of the invention.

The cultivation method of field crops according to the first invention is not critical provided that the coated granular pesticide disclosed in the invention is used. The cultivation method may be one wherein the coated granular pesticide is applied directly to fields at the time of cultivation of crops. Alternatively, there may be used a cultivation method wherein the coated granular pesticide of the invention is added to as one of compositions for substrate for rasing seedling.

An instance of the cultivation method may be one wherein at the time of commencement of seedling, seeding to a field or transplanting as set out hereinbefore, pesticidal granules containing pesticidally active ingredients, which correspond to the whole amount or a major proportion of pesticidally active ingredients to be sprayed/applied to during the course of cultivation, are applied to.

Only one type of coated granular pesticide of the invention may be used, or a mixture of two or more of coated granular pesticides having different types of pesiticidally active ingredients and release functions (a release pattern and the length of a release-suppression time) may be used. The pesticide may be applied to a seedling container, such as a seedling box or seedling pot, at the time of commencement of seedling. Alternatively, the application may be performed simultaneously with seedling or transplanting to fields.

The manner of use of the coated granular pesticide of the invention is not limited with respect to the type of crop, and may be applied not only to leaf vegetables such as cabbage, lettuce, spinach and the like, root vegetables such as radish, carrot and the like, fruit vegetables such as tomato, cucumber, pumpkin and the like, and rices, wheats, corns, potatoes, beans, industrial crops, flowers and ornamental plants, and the like.

The substrate for rasing seedling composition is not limited to any specific one, and is usually composed of a water holding material having the capability of supporting seedlings and holding water and fertilizer ingredients. If necessary, pesticidally active ingredients may be added, for which the coated granular pesticide of the invention is used. The water holding materials should have good water

holding properties and should be inexpensive. Mention is made not only of natural soil, but also of natural organics such as wood pieces, pulp waste, peat moss, coir dust, bog moss and the like, foamed resins, and inorganic porous materials such as perlite, vermiculite and the like. Preferred materials are coir dust, perlite and vermiculite because of its inexpensiveness and stable availability. Only one of these can be used, or a mixture of two or more of them can be used.

The fertilizer ingredients used for the substrate for rasing seedling are not critical, and coated granular fertilizers having the timed-release function are preferred since necessary fertilizer ingredients are added to during the course of from seedling to transplanting to a field, thereby saving labor for application of fertilizers after transplanting.

The coated granular fertilizers having the timed-release function are not critical, and include, for example, a coated granular fertilizer disclosed in Japanese Laid-open patent Application Hei 6-87684 and obtained by coating with a film of a dispersion wherein at lease one selected from powders comprising, as a main component thereof, sugar polymer or derivatives thereof is dispersed in a resin, a multi-layered film coated granular fertilizer disclosed in Japanese Laid-open Patent Application No. Hei 4-202079 wherein a granular fertilizer is coated with a multi-layered film made of a highly water absorbing, swelling material layer and an olefin polymer layer, and a multi-layered film coated granular fertilizer disclosed in Japanese Laid-open Patent Application No. Hei 4-20278 wherein a granular fertilizer is coated with a multi-layered film made of an alkaline material layer and a mixture layer of an olefin resin and an aqueous alkali soluble polymer.

(Second Invention)

Next, the second invention is described in detail.

The second invention is directed to a timed-release control-type coated granular pesticide wherein pesticidal granules having a swelling force of 1 - 30 ml/2 g on absorption of water (hereinafter referred to as core material) are coated with a coating material comprising a thermoplastic resin as its effective component.

The term "timed-release" used in this second invention means a function of suppressing release of pesticidally active ingredients over a given time after application to a field and releasing the ingredients quickly after lapse of the given time.

The timed-release control-type coated granular pesticide exhibits a release pattern composed of a period wherein release is suppressed over a given period of time after application to a field (hereinafter referred to as release-suppression time) and a period of time of from commencement of the release to completion (hereinafter referred to ingredient release time).

The timed-release control-type coated granular pesticide of the invention, which shows a release pattern composed of a suppression time wherein release is suppressed over a given time after application to a field and a release time permitting quick release after lapse of the given period, can be defined as pesticidal granules having such a release pattern that the pesticide has a release-suppression time before 20 wt% of the pesticidally active ingredients in the coated granules is released to an external environment after application thereof to fields and the like, and an ingredient release time wherein 20 wt% to 80 wt% of the pesticidally active ingredients are released, and a ratio of the release-suppression time/ingredient release time is 0.1 or over.

The release mechanism of the pesticidally active ingredients in the timed-release type coated granular pesticide of the second invention is not known at present, nevertheless, we suppose it in the following way. Initially, water vapor present in the outside of a film infiltrates/condenses in the inside of the film, and the core material starts to be swollen by means of the condensed water. An internal stress exceeding a limit of the film is exerted on the film by the action of the swelling force of the core material, thereby causing the film to be cracked. Water abruptly enters through the resultant cracks in the film, and thus, the film immediately suffers breakage. The breakage of the film allows the pesticidally active ingredients inside the film to be released to outside. More particularly, it is believed that the time of the commencement of infiltration of water vapor till the commencement of breakage of the film corresponds to the release-suppression time, and the time before plural pesticidal granules existing after the commencement of the breakage are all reduced to pieces corresponds to the ingredient release time.

In the second invention, in order to realize the timed-release control function, a core material serving as a nucleus should be completely covered with a coating material comprising a thermoplastic resin as its effective component. The covered film should permit water vapor to be permeated into the inside of pesticidal granules, and water not to be passed therethrough. In other words, it is essential to form a film which is completely free of pinholes or cracks.

Where the coated granular pesticide whose film has pinholes or cracks therein is applied to fields such as a paddy field, water abruptly infiltrates in the film through the pinholes or cracks immediately after the application, so that the release function has no release-suppression time. More particularly, if the film has pinholes or cracks, it is not possible to realize such a timed-release control function as defined in the present invention.

Accordingly, where a long release-suppression time is needed, it is effective to coat, on the surfaces of the core material, a coating material having small moisture permeability. The coating of the core material with a coating material having small moisture permeability enables water vapor existing in outside to be infiltrated to the core material inside the film gradually over a long time.

On the other hand, the main factor of determining the length of the ingredient release time is a swelling force of the core material. If the film strength is at a given level, a greater swelling force of a core material tends to result in a shorter ingredient release time. A smaller swelling force of a core material tends toward a longer ingredient release time. In this way, the timed-release control function, i.e. the control in the length of the release-suppression time and the ingredient release time, is determined by the factors such as of the swelling force of a core material, the permeability of a coating material and the film strength and is not determined by one factor.

The manner of controlling the swelling force of a core material is not critical, and depends on the type and selection in content of water-swelling material used as the core material.

In the practice of the invention, the water-swelling materials means all types of materials which become larger in volume on absorption of water and are not limited to specific ones. Specifically, clay minerals mainly composed of montmorillonite, starch, water-absorbing polymers may be mentioned.

Of these, from the standpoint of the cost and ease in preparation, clay minerals mainly composed of montmorillonite are most preferred.

Montmorillonite has a three-layered structure (2:1 type) of a sandwich type wherein one alumina octagonal sheet is intervened between two silicic acid tetragonal sheets. The trivalent aluminium present in the octagonal sheet is partially substituted with magnesium or iron having a lower valence, thereby constituting crystal lattices as a whole. Mention is made of bentonite as a typical smectite clay, which is mainly composed of clay mineral montmorillonite. Bentonite is in form of particles which are finest among various types of clays and exhibits high activity, and is the most preferable material for use as a water-swelling material in the invention.

Bentonite is a name of a clay mineral which comprises a clay mineral having a swelling crystal lattice as its primary component along with minor components such as quartz, feldspar, cristobalite, zeolite, mica, and carbonates and sulfates of alkaline earth metals, and consists of a deposit clay mainly composed of smectite which is a swelling clay mineral.

Bentonite can be classified into three groups including sodium bentonite which is rich in sodium ions and is able to absorb large amounts of water thereby showing a high swelling property, calcium bentonite which is rich in calcium ions and magnesium ions with a low swelling property, and activated bentonite which is artificially imparted with welling activity through soda treatment. The swelling force of bentonite increases or decreases depending on the content of montmorillonite, and bentonite differs in property and quality depending on the place of origin and the product. Moreover, the swelling changes depending on the particle size, and proper selection should be made while taking these characteristic properties into account.

As starch, there may be used, aside from corn starch and potato starch, oxidized starch, α-starch, inorganic acid and fatty acid esters of starch, processed starches such as alkyl or hydroxyalkyl ethers of starch, and starch derivatives. As an ester-type starch, starch acetate, starch phosphate, starch nitrate, starch succinate, starch xanthogenate and the like may be mentioned. For an ether-type starch, mention is made of carboxymethyl starch, methyl starch, hydroxyalkyl starch, allyl ether starch, cationized starch and the like. These are not mentioned as limitation.

The water-absorbing polymers are materials which suffer volumetric expansion on absorption of water. For water-absorbing natural polymers, mention is made of starch, cellulose, hyaluronic acid, agarose, collagen and other proteins. Examples of water-absorbing synthetic polymers include polyvinyl alcohol polymers, acrylic polymers, and other maleic acid polymers, vinylpyrrolidone polymers, polyether polymers, condensed polymers and the like. These are not mentioned as limitation of the polymers.

The term "swelling force at the time of water absorption" used in the second invention is a value measured according to the following procedure. 2 g of a core material is charged into a measuring cylinder (100 ml) with a ground stopper, in which 100 ml of purified water at 25°C has been placed, in such a way that the core does not attach to the inner walls of the measuring cylinder, thereby permitting the core material to be settled at the bottom of the measuring cylinder. The measuring cylinder is stopped with the stopper and is allowed to stand for 24 hours, after which the volume of the core material deposited at the bottom of the measuring cylinder is read and this value is provided as a swelling force (ml/2 g). The core material for measuring the swelling force may be either a starting material formed in powder or a granulated product. In either case, a dried one is used for testing.

If the swelling force at the time of water absorption is too small, the ingredient release time is elongated. In addition, an internal stress exerted on a film becomes small, and a film capable of being cracked by the action of the swelling force has to be small in film strength. When the film strength is small, there is the high probability that the film is damaged at the time of manufacture, storage, transportation and use of pesticidal granules, thus unfavorably making it difficult to keep the quality of the pesticidal granules. In contrast, where the swelling force at the time of water absorption is too large, the film on pesticidal granules is rendered thick or the ratio of a resin component in the film is increased to increase the film strength. Otherwise, a substantial ingredient release time could not be obtained. Where a resin solution is sprayed over a core material and dried to coat a film thereon, a high concentration of a resin component in the resin solution results in a longer coating operation time. In addition, if the film becomes thick, this unfavorably invites high cost.

For the reasons set out above, the swelling force at the time of absorption of water in the core material according to the invention should preferably range 1 - 30 (ml/2 g), more preferably 5 - 20 (ml/2 g).

The timed-release control-type coated granular pesticide of the second invention should preferably be controlled so that an ingredient release time during which a cumulative release rate of pesticidally active ingredients reaches from 20 to 80% is within a range of 1 - 120 days.

In order to control the ingredient release time, it is sufficient to select a core material having an appropriate swelling force depending on the film strength. If the film strength is at a given level, a greater swelling force results in the completion of the period within a shorter time after commencement of the release. A smaller swelling force leads to

EP 0 966 882 A1

the release control continued over a longer time. For applications requiring quick action, it is recommended that the swelling force is set at a relatively high level, and for applications requiring a given concentration to be continuedly kept, the swelling force is set at a relatively small level.

In the second invention, the core material may be formulated, aside from the pesticidally active ingredients and water-swelling materials, with any auxiliary ingredients such as, for example, granulation aids (including clay minerals not mainly composed of montmorillonite), binders, surface active agents, chemical injury mitigating agents, and the like.

The granulation aids, which are used for the preparation of a core material, if necessary, may be any known materials. There may be formulated granulation aids such as mineral carriers, plant carriers, slaked lime, urea, ammonium sulfate, ammonium chloride, compound fertilizers, plastic foams, and the like. For instance, mineral carriers include clay, kaolin, sericite, talc, acid clay, pumice stone, silica sand, quartzite, calcium carbonate, zeolite, perlite, vermiculite, and the like, and plant carriers include rice hull, saw dust, wood flour, pulp floc, soybean flour, corn stem, and the like.

For a binder formulated in the core material, any known materials may be used. For instance, there may be used gum arabic, carboxymethyl cellulose, hydroxyethyl cellulose, ligninsulfonates, polyvinyl alcohol, polyethylene glycol, sodium polyacrylate, surface active agents, liquid paraffin and the like.

The moisture permeability and film strength of a coating material, which are other timed-release function control factor, depend primarily on the constituent component of the material and the film thickness. When a coating material, which ensures high uniformity in thickness and small moisture permeability, is used and the film is formed as thick, the release-suppression time can be reliably extended. If the film has too high a break strength, cracks are unlikely to occur. Moreover, if the film is too thick, the coating material has to be used in an increasing amount, which unfavorably leads to a relatively low content of pesticidally active ingredients, thus becoming high in cost.

The film thickness differs depending on the release function required and the type and composition of resin and also depending on the pesticidal granule size. The granule size is not critical, and should preferably be in the range of 0.1 - 10 mm from the standpoint of the ease in coating and the ease in handling on use. When the granule size is within the above range, the thickness of the film coated on pesticidal granules should preferably be within a range of 1 - 100 μm although this cannot be said definitely because the thickness may differ depending on the release function and the film composition.

Specific examples of the thermoplastic resin used in the second invention include olefin polymers such as polyethylene, polypropylene, ethylene/propylene copolymer, ethylene/carbon monoxide copolymer, polybutene, butene/ethylene copolymer, butene/propylene copolymer, polystyrene and the like, olefin resins such as ethylene/vinyl acetate copolymer, ethylene/vinyl acetate/carbon monoxide copolymer, ethylene/acrylic acid copolymer, ethylene/methacrylate copolymer and the like. vinylidene chloride resins such as vinylidene chloride/vinyl chloride copolymer, diene resins such as butadiene polymer, isoprene polymer, chloroprene polymer, butadiene/styrene copolymer, EPDM polymer, styrene/isoprene copolymer and the like, waxes such as beeswax, Japan wax, paraffin and the like, natural resins such as natural rubber, rosin and the like, oils, fats and modified products thereof such as hardened products, solid fatty acids, metal salts and the like, polycaprolacton, polylactic acid, polymers of hydroxycarboxylic acids such as poly-3-hydroxybutyric acid, aliphatic polyesters, and the like. Of these, olefin resins having small moisture permeability are preferred.

It will be noted that rubbery materials, such as ethylene/vinyl acetate copolymer, ethylene/vinyl acetate/carbon monoxide copolymer and diene polymer, are effective in controlling the time before a coating material suffers cracks. However, if these polymers are present in the coating material in large amounts, there is the possibility that the release-suppression time becomes extremely shortened or no crack is formed. In this sense, the amount of these polymers in the coating material should preferably be less than 20 wt%. Especially, with ethylene/vinyl acetate copolymer, the amount should preferably be less than 15 wt%.

In the second invention, a powder insoluble or hardly soluble in water may be dispersed in the film. Examples of the powder include talc, clay, kaolin, bentonite, muscovite, phlogopite, mica-shaped iron oxide, metal oxides, silicates glass, carbonates, sulfates of alkaline earth metals, and starch. Preferable powders are in the form of a sheet-like fine powder, typical of which are talc, muscovite, sericite and the like. These are in the form of flakes with a value of particle size/thickness of 2 or over. More preferably, the value of particle size/thickness should be 10 or over.

The size of the water-insoluble or hardly soluble powder is not critical provided that it has such a shape as mentioned above, and generally ranges 0.5 - 50 μm, preferably 20 μm or below. As for the size, no limitation is placed on the particle size if the powder is completely included in the film. Accordingly, in order to achieve full coverage, it is preferred that the particle size is selected in consideration of a film thickness and a film having a uniform distribution of the powder in the film is selected. The amount of the powder is not limited, and the content in the coating material composition ranges 5 - 95 wt%, preferably 50 - 90 wt%.

The increase in amount of the powder leads to the reduction in amount of a thermoplastic resin serving as a main component of the coating material, and thus, the addition of the powder to the coating material is beneficial in cost.

Besides, all types of materials may be added to the film within a range not considerably impeding the properties derived from thermoplastic resins. Especially, surface active agents are able to improve moisture permeability of the resultant film and are thus effective for use as a regulator for the moisture permeability.

The coated granular pesticide of the second invention has such a form that the core material is coated on the surfaces thereof, and the form of carrying pesticidally active ingredients is preferably a granular of a spherical form. The granulation method may be carried out according to any known procedures, among which an extruding granulation method is simplest.

The pesticidally active ingredients used in the invention are not critical, and are mainly those having the actions of insecticide, germicide, herbicide, plant growth regulation, miticide, nematicide and the like. Moreover, the pesticidally active ingredients further repellents and attractants, which may be applied to without limitation on their types. The pesticidally active ingredients should preferably be in the form of solid powder at normal temperatures, and my be liquid at normal temperatures. In addition, the pesticidally active ingredients my be soluble in water, hardly soluble in water, or insoluble in water, and is not limited in this regard. Specific examples of the pesticidally active ingredients utilized in the present invention are mentioned below, which are shown by way of examples and should not be construed as limitation thereof.

Mention is made of 1-(6-chloro-3-pyridylmethyl)-N-nitroimidazolidin-2-ylideneamine), O,O-diethyl-S-2-(ethylthio)ethylphosphorodithioate, 1,3-bis(carbamoylthio)-2-(N,N-dimethylamino)propane hydrochloride, 2,3-dihydro-2,2-dimethyl-7-benzo[b]furanyl=N-dibutylaminothio-N-methylcarbamate, (2-isopropyl-4-methylpyrimidyl-6)-dietylthiophosphate, 5-dimethylamino-1,2,3-trithiane oxalate, O,O-dipropyl-O-4-methylthiophenylphosphate, ethyl=N-[2,3-dihydro-2,2-dimethylbenzofuran-7-yloxycarbonyl(methyl)aminothio]-N-isopropyl-β-alaninate, 1-naphthyl-N-methylcarbamate, 2-isopropoxyphenyl-N-methylcarbamate, diisopropyl-1,3-dithioran-2-ylidene-malonate, 5-methyl-1,2,4-triazolo[3,4-b]benzothiazole, 1,2,5,6-tetrahydropyrrolo[3,2,1-ij]quinolin-4-one, 3-allyloxy-1,2-benzoisothizol-1,1-dioxide, sodium salt or dimethylamine salt or ethyl ester of 2,4-dichlorophenoxyacetate, sodium salt or ethyl or butyl ester of 2-methyl-4-chlorophenoxyacetate, sodium salt or ethyl ester of 2-methyl-4-chlorophenoxybutyrate, α-(2-naphthoxy)propionanilide, S-1-methyl-1-phenylethyl=piperidin-1-carbothioate, S-(4-chlorobenzyl)-N, N-diethylthiocarbamate, 5-tertiary-butyl-3-(2,4-dichloro-5-isopropoxyphenyl)-1,3,4-oxadiazolin-2-one, 2-[4-(2,4-dichlorobenzoyl)-1,3-dimethylpyrazol-5-yloxy]acetophenone, 4-(2,4-dichlorobenzoyl)-1,3-dimethyl-5-pyrazolyl-p-toluenesulfonate, 3-isopropyl-2,1,3-benzothiadiazinon-(4)-2,2-dioxide or its sodium salt, 2-chloro-4-ethylamino-6-isopropylamino-s-triazine, 2-methylthio-4-ethylamino-6-(1,2-dimethylpropylamino)-s- triazine, 2-methylthio-4,6-bis(ethylamino)-s-triazine, 2-methylthio-4,6-bis(isopropylamino)-s-triazine, 1-(α,α-dimethylbenzyl)-3-(paratolyl)urea, methyl=α-(4,6-dimethoxypyrimidin-2-ylcarbamoylsulfamoyl)-o-toluate, 2-benzothiazol-2-yloxy-N-methylacetoanilide, 1-(2-chloroimidazo[1,2-a]pyridin-3-ylsulfonyl)-3-(4,6-dimethoxypyrmidin-2-ylurea, S-benzyl=1,2-dimethylpropyl(ethyl)thiocarbamate, 2-chloro-N-(3-methoxy-2-thenyl)-2',6'-dimethylacetoanilide, and the like.

Further, in the practice of the invention, there may be included, as a pesticidally active ingredient. phytoalexins which is a low-molecular-weight antimicrobial substance prepared with a plant after contact of the plant with a microorganism and accumulated in the plant body.

Bacteria having a propagation-inhibiting effect on pathogenic bacteria may also be used, and include, for example, filamentous fungii belonging to Trichoderma (Trichoderma lignorum, Trichoderma viride and the like), Gliocladium (Gliocladium virens), Cephalosporium, Coniothyrium, Sporidesmium, Laetisaria, and the like, and bacilli and actinomycetes belonging to Agrobacterium (Agrobacterium radiobacter), Bacillus (Bacillus subtilis), Pseudomonas (Pseudomonas cepacia, Pseudomonas glume, Pseudomonas gladioli, Pseudomonas fluorescens, Pseudomonas aureofaciens, Pseudomonas putida, Pseudomonas solanacearum and the like), Xantomonas, Erwinia, Arthrobacter, Corynebacterium, Enterobacter, Azotobacter, Flavobacterium, Streptomyces (Streptomyces achromopgenes, Streptomyces phaeopurpureus, Streptomyces hydgroscopicus, Streptomyces nitrosporeus, Streptomyces baarnensis and the like), Actinoplanes, Alcanigenes, Amorphosporangium, Cellulomonas, Micromonospora, Pasteurella, Hafnia, Rhizobiujm, Bradyrhizobium, Serratia and the like.

Of these, preferable ones are antibacterial active substance-producing bacteria. More particularly, bacteria of genus Pseudomonas having high productivity of antibacterial substance are mentioned. For instance, strains capable of producing antibiotics include Pseudomonas cepacia which is able to produce antibiotic pyrrolnitrin (against bacteria for damping off disease of raddish seedlings), Pseudomonas fluorescens capable of producing antibiotic phenazinecarboxylic acid (against bacteria for damping off disease of wheat), pyrrolnitrin, Pyrrolteorin (against bacteria for damping off disease for cotton and cucumber seedlings), Oomycin A(against bacteria for damping off disease of cotton seedlings), cyanide (bacteria for black root of tobacco), and diacetylfluoroglucinol (against bacteria for damping off disease of wheat), and bacteria belonging to fluorescent Pseudomonas (Pseudomonas putida, Pseudomonas fluorescens, fluorescent pseudomonas and the like) capable of producing iron-chelating substance, siderophores, which permits plants alone to utilize iron in soil without permitting its utilization with disease germs. Besides, there may be mentioned Agrobacterium radiobacter which is able to produce agrosin 84 of bacteriocin (against bacteria for crown gall of tobacco), and fluorescent pseudomonas, Pseudomonas putida, Pseudomonas fluorescens, and strains of Bacillus as Plant growth promoting rhizobacteria(PGPR) which are able to product growth promoting substances such as plant hor-

EP 0 966 882 A1

mones.

Especially, a group of CDU decomposing bacteria (belonging to Pseudomonas, Arthrobacter, Corynebacterium, Agrobacterium and the like) and strains belonging to Streptomyces (Japanese Patent Publication No. Hei 5-26462) have pronounced inhibition power against soil-borne pathogenic molds and are favorably employed.

The method for manufacturing the coated granular pesticide according to the second invention is not critical. An instance includes a method wherein while a mixed solution dissolving a coating material mainly composed of a thermoplastic resin is sprayed over a fluidized core material, the solvent is removed from the core material surfaces by means of a high-speed hot gas stream and the material is dried to coat the surfaces of the core material with the coating material.

An example of a coating apparatus usable for the manufacturing method is described with reference to the accompanying drawings. For the manufacture of the product of the invention, it is most preferred to use a spouting column as shown in Fig. 2. A spouting column 1 is so operated that a mixed solution 12 of a coating material is sprayed, by means of a spray nozzle 4, over the surface of a core material 5 which is in a tumbled or fluidized state, and simultaneously with the coating of the surfaces, a hot gas heated in a heat exchanger 8 is charged from the lower portion of the column 1, thereby causing the solvent of the mixed solution deposited on the surfaces of the core material 5 to be instantaneously evaporated for drying by the high-speed hot gas stream. The mixed solution 12 is supplied to the spray nozzle 4 by means of a pump 6. The hot gas is fed to the lower portion of the spouting column 1 by means of a blower 10.

The invention is described by way of examples, which should not be construed as limiting the invention thereto. "%" in the examples is "wt%" unless otherwise indicated.

First, the first invention is described by way of examples.

1. Preparation of coated granular pesticides

Example 1

(Preparation of pesticidal granules A)

3 parts by weight of a pesticide containing, as a pesticidally active ingredient. 98% of 1,2,5,6-tetrahydropyrolo[3,2,1-ij]quinolin-4-one, 70 parts by weight of bentonite and 27 parts by weight of clay were uniformly mixed in a kneader, followed by addition of water and kneading. The resultant mixture was subjected to extruding granulation by means of a screw extruding granulator (screen diameter of 0.8 mm∅) to obtain primary pesticidal granules. The granules were subjected to smoothing treatment by means of a rotary disc-type shaping machine (Marumerizer QJ400, made by Fuji Paudal Co., Ltd.) until a circularity coefficient was 0.7 or over.

The treating procedure was such that the granules were weighed, supplied to the rotary disc-type shaping machine, and shaped under operation conditions indicated below.

After completion of the shaping, the granules were dried under conditions of 100°C by use of a hot gas circulating dryer and classified by means of a vibratory screen to obtain a secondary pesticidal granular product (pesticidal granules) containing 2.8% of the pesticidally active ingredient and having a size of 0.8 - 1.4 mm. The pesticidal granules were subjected to measurement of circularity coefficient by use of PIAS-IV of PIAS Co., Ltd. For the measurement, randomly sampled 100 granules were provided as a sample. The results of the measurement of the circularity coefficient are shown in Table 1.

Operation conditions

Operation system: batchwise system
Operation time: 1 minute
Grating pitch: 1 mm
Number of revolutions: 788 rounds/minute
Charge: 5 kg(per time)

Example 2

(Preparation of pesticidal granules B)

Pesticidal granules B were obtained in the same manner as in (Preparation of pesticidal granules A) except that the operation time of the rotary disc-type shaping machine was changed from 1 minute to 5 minutes. The thus obtained pesticidal granules B were subjected to measurement of circularity coefficient in the same manner as in (Preparation of pesticidal granules A). The results of the measurement of the circularity coefficient are shown in Table 1.

Example 3

(Preparation of pesticidal granules C)

Pesticidal granules D were obtained in the same manner as in (Preparation of pesticidal granules B) except that the operation time of the rotary disc-type shaping machine was changed from 1 minute to 10 minutes. The thus obtained pesticidal granules D were subjected to measurement of circularity coefficient in the same manner as in (Preparation of pesticidal granules A). The results of the measurement of the circularity coefficient are shown in Table 1.

Comparative Example 1

(Preparation of pesticidal granules D)

Pesticidal granules D were obtained in the same manner as in (Preparation of pesticidal granules A) except that the operation time of the rotary disc-type shaping machine was changed from 1 minute to 20 seconds. The thus obtained pesticidal granules D were subjected to measurement of circularity coefficient in the same manner as in (Preparation of pesticidal granules A). The results of the measurement of the circularity coefficient are shown in Table 1.

Commercially available granules were provided as other Comparative Examples. More particularly, Comparative Example 2 dealt with Hinoclore granule (Mikasa Chem. Ind. Co., Ltd.), Comparative Example 3 dealt with Padan Beam granule (Takeda Chemical Industries, Co., Ltd.), and Comparative Example 4 dealt with Oncol granule (Otsuka Chemical Co., Ltd.). The granules of Comparative Examples 2 - 4 were each subjected to measurement of circularity coefficient in the same manner as in (Preparation of pesticidal granules A). The results of the measurement of the circularity coefficient are shown in Table 1.

From Table 1, it will be seen that the circularity coefficients of the pesticidal granules of Examples 1 - 4 are 0.7 or over with respect to the average value, maximum value and minimum value, and thus there can be obtained pesticidal granules for coating of the invention. As for Comparative Examples 1 - 4, the average value of the circularity coefficient was found to at 0.7 or over except Comparative Example 2. However, the minimum value was much lower than 0.7.

Table 1

| Pesticidal Granules | Circularity Coefficient | | | |
|---|---|---|---|---|
| | Average | Maximum | Minimum | Standard Deviation |
| Example 1 (A) | 0.8687 | 0.9821 | 0.7706 | 0.0772 |
| Example 2 (B) | 0.9567 | 0.9922 | 0.7951 | 0.0327 |
| Example 3 (C) | 0.9595 | 0.9954 | 0.9031 | 0.0239 |
| Comp. Ex. 1 (D) | 0.8066 | 0.9835 | 0.5207 | 0.0715 |
| Comp. Ex. 2 | 0.6377 | 0.9014 | 0.3775 | 0.1082 |
| Comp. Ex. 3 | 0.7810 | 0.9822 | 0.5114 | 0.0963 |
| Comp. Ex. 4 | 0.7160 | 0.9107 | 0.3929 | 0.1041 |

2. Coating of pesticidal granules

Using a spouting column coating apparatus shown in Fig. 1, the pesticidal granules obtained in the foregoing "Preparation of pesticidal granules" were, respectively, coated with coating materials having compositions indicated in Table 2 to predetermined coating rates, thereby obtaining coated granular pesticides of Examples 4 to 10 and Comparative Examples 5 to 11. The preparation conditions were accorded to those of the following method.

The coating rate is a ratio of a weight of a coated film to a coated granular pesticide wherein the total of a weight (a) of pesticidal granules and a weight (b) of the film was at 100 wt%, and is a value obtained from the equation

of [b × 100/(a + b) ].

The solution of a coating material was one wherein the coating material was uniformly dissolved in tetrachloroethylene at a concentration of 2.5 wt%.

One fluid nozzle: an opening of 0.4 mm, full cone type
Non-coated pesticidal granules: 3 kg
Hot gas temperature: 100 ± 2°C
Hot gas flow rate: 4 m$^3$/minute
Spraying rate: 0.2 kg/minute

The coating step started at the time when the pesticidal granules in a fluidized state arrived at a predetermined temperature. After spraying over a given time, drying was effected for a given time to obtain a coated granular pesticide. It will be noted that with respect to a film formed of first and second coating layers, a coating material solution for the first coating layer was sprayed, and immediately after completion of the spraying of the first coating layer, a coating material solution for the second coating layer was sprayed, and drying was performed after completion of the spraying of the second coating layer.

## Table 2

| | Coating Material Composition | | | | | | | | Tested pesticidal granules |
|---|---|---|---|---|---|---|---|---|---|
| | First Layer | | | | Coating rate (%) | Second Layer | | Coating rate (%) | |
| | Coating material 1 | Coating material 2 | Coating material 3 | Coating material 4 | | Coating material 1 | Coating material 2 | | |
| Example 4 | PE 30 | - | - | Talc 70 | 20 | - | - | - | A |
| Example 5 | PE 35 | WAX 10 | - | Talc 55 | 20 | - | - | - | B |
| Example 6 | ECO 20 | PEO 1 | - | Talc 79 | 20 | - | - | - | B |
| Example 7 | ECO 15 | Starch 5 | - | Talc 80 | 20 | - | - | - | B |
| Example 8 | PEG 25 | KI 75 | - | - | 5 | ECO 30 | talc 70 | 15 | C |
| Example 9 | PE 25 | EVA 5 | - | Talc 70 | 10 | WAX 100 | - | 10 | C |
| Example 10 | PE 34 | WAX 1 | SA 5 | Talc 60 | 20 | - | - | - | B |
| Comp.Ex. 5 | PE 30 | - | - | Talc 70 | 20 | - | - | - | D |
| Comp.Ex. 6 | PE 35 | - | - | Talc 55 | 20 | - | - | - | D |
| Comp.Ex. 7 | ECO 20 | PEO 1 | - | Talc 79 | 20 | - | - | - | D |
| Comp.Ex. 8 | ECO 17 | Starch 5 | - | Talc 78 | 19 | - | - | - | D |
| Comp.Ex. 9 | PEG 25 | KI 75 | - | - | 5 | ECO 30 | Talc 70 | 10 | D |
| Comp.Ex. 10 | PE 25 | EVA 5 | - | Talc 70 | 10 | WAX 100 | - | 10 | D |
| Comp.Ex. 11 | PE 34 | WAX 1 | SA 5 | Talc 60 | 20 | - | - | - | D |

(The unit of the coating material composition was parts by weight.)

PE: low density polyethylene, MI = 23, d = 0.916 g/cm$^3$

Talc: average size of 5 μm

Wax: polyethylene wax, Mn = 2,000

ECO: ethylene-carbon monoxide copolymer, MI=0.75, CO=0.95 wt%

PEO: polyethylene oxide, Mn=300,000

Starch: starch flour, corn (Wako Pure Chemical Industries, Ltd.)

PEG: polyethylene glycol (made by NOF Co., commercial name: Polyethylene Glycol 20000)

KI: maleimide modified product of ethylene/maleic anhydride copolymer (made by Kuraray Co., Ltd. , commercial name: KI Gel-201K-F2)

EVA: ethylene-vinyl acetate copolymer, VAc=15 wt%, MI=7.0

SA: polyoxyethylene monostearate, HLB=13

3. Release function confirmation test

The release function confirmation test of individual coated granular pesticides obtained in the Preparatory Examples was performed. In the release confirmation test, there was measured a time (release commencing time) before a pesticidally active ingredient was released from the inside of a pesticidal granule to outside by charging the granular pesticide into water so that the coated granular pesticide suffered cracks thereby permitting the film to be broken.
The test method was conducted in a manner as described below.
1.5 ml of water was placed in a test tube with a cap (12 mm × 72 mm), and one granule, per test tube, of each of the coated granular pesticides obtained in the foregoing Preparatory Examples was charged into a test tube, followed by capping. For each experimental treatment, 100 tubes (granules) were used. The test tubes were kept under constant conditions of a water temperature of 25°C, and the number of the coated granules being broken in relation to time was counted. Observation was made everyday over one week from the commencement of the test, followed by further observation every week. The cumulative release rate means the cumulative breakage number of the test granules. A graph was made by plotting the results of the observation while taking the cumulative release rate along the ordinate and the days after application along the abscissa. The days of from the commencement of the test to a 10% release (release-suppression time) was taken as "D1", the days subsequent to the first-mentioned days to a 90% release (release time) was taken as "D2", and a release rate at the time corresponding to 1/2 of the release-suppression time was taken as "1/2·D1". The results are shown in Table 3.
Separately, 1 g of a coated granular pesticide was applied into a given amount of water and immersed in the water under constant conditions of a water temperature of 25°C. After passage of a given time, the granules were removed from water for separation into the coated granular pesticide and water. Thereafter, the pesticidal ingredient released out in the thus separated water was quantitatively determined. The concentration of the pesticidal ingredient in the water was measured by use of a high-performance liquid chromatograph (486 tunable UV/VIS detector, made by Waters Inc.). During the period of time at which the film of the coated granular pesticide was not broken, no pesticidal ingredient was detected. From these results, it was confirmed that the pesticidal ingredient was not released out in water through a film during the course of time when the film was not broken (i.e. the release rate was at 0%).
As will be apparent from "1/2·D1", the timed-release coated granular pesticides obtained by use of pesticide granules having a circularity coefficient of 0.7 or over exhibit a very small in initially releasing amount on comparison with the timed-release coated granular pesticide obtained by use of pesticidal granules comprising pesticidal granules having a circularity less than 0.7.

Table 3

| Tested coated Granules | Results of Release | | |
|---|---|---|---|
| | Release Days | | Release Rate (%) |
| | D1 | D2 | 1/2 · D1 |
| Example 4 | 70 | 48 | 0 |
| Example 5 | 55 | 30 | 0 |
| Example 6 | 6 | 4 | 0 |
| Example 7 | 50 | 24 | 0 |
| Example 8 | 20 | 9 | 0 |
| Example 9 | 9 | 4 | 0 |
| Example 10 | 4 | 2 | 0 |
| Comp.Ex. 5 | 66 | 45 | 3.5 |
| Comp.Ex. 6 | 50 | 28 | 2.1 |
| Comp.Ex. 7 | 4 | 4 | 2.3 |
| Comp.Ex. 8 | 23 | 10 | 4.6 |
| Comp.Ex. 9 | 9 | 5 | 2.2 |
| Comp.Ex. 10 | 5 | 3 | 6.7 |
| Comp.Ex. 11 | 3 | 2 | 3.3 |

4. Preparation of coated granular pesticide mixtures

The coated granular pesticides obtained in the foregoing "Coating of Granular Pesticides" of 2 were formulated at the following ratios by weight and agitated to uniformity thereby obtaining the following coated granular pesticide mixtures (Examples 11 - 13).

  Example 11 Coated granular pesticide of Example 4: coated granular pesticide of Example 8 = 5:5
  Example 12 Coated granular pesticide of Example 5: coated granular pesticide of Example 8 = 4:6
  Example 13 Coated granular pesticide of Example 7: coated granular pesticide of Example 8: coated granular pesticide of Example 9 = 5:4:1

5. Cultivation test

The inventive products were used for cultivation test.
3000 g of a diluvial volcanic ash soil (maximum moisture capacity of 120%, particle size of 2 mm or below) provided as a bed soil for raising-seedling, ammonium sulfate-phosphate ($N-P_2O_5-K_2O$ = 13-13-13, commercial name of Chisso Co.) serving as a seedling-raising fertilizer were charged into a concrete mixer so that N, $P_2O_5$, $K_2O$ were, respectively, at 1 g, followed by mixing to obtain a uniform mixture.
2000 g of the mixture was placed in the nursery box for paddy-rice, with the surface being flattened. A pesticide and 150 g of germination-hastened rice seeds (variety: Hinohikari) were sowed in and applied to the nursery uniformly as stratified. The pesticide was used in an amount of 100 g for experimental treatments using Example 8 and Comparative Example 8 and 200 g for experimental treatments using Examples 11 - 13, respectively. Further, 1000 g of the mixture was used for soil coverage.
Thereafter, the nursery boxes were placed in a growth cabinet, followed by growing the resultant seedlings over 21 days under conditions including a light period of 12 hours and a dark period of 12 hours and a constant temperature of 20°C until an accumulated temperature reached 420°C. The light source was a fluorescent lamp, with a distance of the surface layer of the nursery box from the light source being at 30 cm. It will be noted that the relative humidity in this season was found to be at 80 - 90%. For the management of the cultivation, watering was appropriately effected so that the surface layer of the compost was not dried up. Other raising of seedling management was performed according to a convention method. The results of the cultivation test are shown in Table 4.

As will be apparent from the results in Table 4, in the test treatments of Examples 8, 11 - 13, the growth during the seedling period was in smooth progress, and no chemical injury was observed. With Comparative Example 8 wherein the same pesticidally active ingredient as in the examples was contained, growth became slower on the way of the seedling time upon comparison with the respective examples, with a symptom of chemical injuries. After completion of the seedling, cultivation was carried out in a paddy field at Minamata city of Kumamoto Prefecture, revealing that the experimental treatments of Examples 11 - 13 permitted the chemical efficacy to be continued over a long time.

Table 4

| Experimental treatment | Status of cultivation |
|---|---|
| Example 8 | no chemical injury |
| Example 11 | no chemical injury |
| Example 12 | no chemical injury |
| Example 13 | no chemical injury |
| Comp. Ex. 8 | some symptom of chemical injury after about 2 weeks |

Next, the second invention is illustrated by way of examples.

6. Preparation of pesticidal granules for coating (core material)

Examples 14 - 21, Comparative Examples 12, 13

A starting material having such a composition (wt%) as shown in Table 5 was uniformly mixed in a mixer, followed by addition of water and kneading by means of a kneader. The resultant mixture was subjected to extruding granulation by means of a screw extrusion-type granulator (screen diameter of 0.8 mm∅), after which the resultant granules were spherically shaped by means of a shaping machine. Subsequently, the granules were dried in a fluidized condition, followed by screening to obtain a core material having a granule size of 0.8 - 1.4 mm∅. It is to be noted that polyvinyl alcohol used in a core material 7 was added to in the form of an aqueous solution. The swelling force of the core material was separately measured. The results are shown in Table 6.

Table 5

| | Composition of Core Material | | | | |
|---|---|---|---|---|---|
| | Water-swelling Material 1 | Water-swelling material 2 | Non-swelling material 1 | Non-swelling material 2 | Pesticidally active ingredient |
| Core material 1 | bentonite 1 20 | starch 5 | clay 70 | | pesticide 5 |
| Core material 2 | bentonite 1 30 | | clay 65 | | pesticide 5 |
| Core material 3 | bentonite 2 25 | | clay 70 | | pesticide 5 |
| Core material 4 | bentonite 2 30 | | clay 65 | | pesticide 5 |
| Core material 5 | bentonite 2 50 | | clay 40 | talc 5 | pesticide 5 |
| Core material 6 | bentonite 2 70 | | clay 20 | talc 5 | pesticide 5 |
| Core material 7 | | | clay 90 | PVA 5 | pesticide 5 |
| Core material 8 | bentonite 3 70 | | clay 20 | talc 5 | pesticide 5 |

*The figures indicate formulation ratios (on the weight basis) of the respective coating materials.

Table 6

| Experimental Treatment | Coating material composition | | | Tested core material | |
|---|---|---|---|---|---|
| | Thermoplastic resin | Auxiliary component 1 | Auxiliary component 2 | Type | Swelling force (ml/2 g) |
| Example 14 | polymer 1 20 | talc 80 | | core material 1 | 8 |
| Example 15 | polymer 1 20 | talc 80 | | core material 2 | 9 |
| Example 16 | polymer 1 20 | talc 80 | | core material 3 | 10 |
| Example 17 | polymer 1 20 | talc 80 | | core material 4 | 11 |
| Example 18 | polymer 1 25 | talc 75 | | core material 4 | 11 |
| Example 19 | polymer 1 30 | talc 70 | | core material 4 | 11 |
| Example 20 | polymer 2 30 | talc 68 | surface active agent 2 | core material 5 | 15 |
| Example 21 | polymer 2 30 | talc 68 | surface active agent 2 | core material 6 | 20 |
| Comp.Ex. 12 | polymer 1 20 | talc 80 | | core material 7 | 0 |
| Comp.Ex. 13 | polymer 3 100 | | | core material 8 | 32 |

*The figures, respectively, indicate formulation ratios (on the weight basis) of individual coating materials.

Bentonite 1: swelling force at 28 ml/2 g
Bentonite 2: swelling force at 14 ml/2 g
Bentonite 3: swelling force at 48 ml/2 g
Starch: corn starch with a swelling force of 9 ml/2 g
Clay: kaolin (white clay)
Talc: average particle size at 5 $\mu$m
PVA: polyvinyl alcohol, average degree of polymerization of 400 - 600, fully saponified type
Pesticide: containing 70 wt% of the pesticidally active ingredient of 2-benzothiazol-2-yloxy-N-methylacetoanilide
Polymer 1: ethylene/carbon monoxide copolymer, MI=0.75, CO=0.95 wt%
Polymer 2: low density polyethylene, MI=23, d=0.916 g/cm$^3$
Polymer 3: paraffin, m.p. Of 68-70°C
Surface active agent: hexaoxyethylene nonylphenyl ether, HLB = 13

(Measurement of swelling force of core materials)

2 g of each of the core materials experimentally made above was added to a measuring cylinder with a ground stopper (100 ml), in which 100 ml of purified water at 25°C had been placed, without attachment thereof to inner walls, thereby permitting it to be smoothly settled down to the bottom of the measuring cylinder. After addition of the whole amount of the material, the cylinder was stoppered, followed by allowing to stand for 24 hours and reading the capacity deposited at the bottom of the measuring cylinder. The value was taken as a swelling force (ml/2 g) of the core material.

(Preparation of coated granular pesticides)

Using the spouting column coating apparatus shown in Fig. 2, coating material compositions set out in Table 6 were coated at a coating rate of 20%, thereby obtaining coated granular pesticides of the invention.
The coating method was performed according to the following procedure.
The coating rate is a ratio of a weight of a coated film (b) to a coated granule provided that the total of a weight of a core material (a) and the weight of the coated film (b) is taken as 100 wt%, and is calculated according to the following equation

EP 0 966 882 A1

$$[b \times 100/(a + b)].$$

The preparation of the inventive product is described with reference to the flow sheet of Fig. 2.

A high temperature hot gas for spouting (nitrogen gas) is passed from a lower portion to an upper portion of a spouting column 1 which has such a shaped as to have a column diameter of 250 mm, a height of 2000 mm, a diameter of a nitrogen gas-spouting port of 50 mm and an angle of cone of 50 degrees. The high temperature hot gas was passed from a blower 10, passed through an orifice flowmeter 9, heated to a high temperature by means of a heat exchanger 8, supplied from the bottom of the spouting column 1, and exhausted from an outlet for exhaust gas 3 provided at the upper portion of the spouting column 1.

Inside the spouting column 1 through which the high temperature hot gas is circulated, 3 kg of the core material (pesticidal granules) 5 was charged from the charge port for a core material 2 provided at a side of the spouting column 1, followed by fluidization of the core material 5 as shown in Fig. 2. The flow rate and the hot gas temperature, respectively, have to be appropriately controlled for every sample, and the flow rate is controlled while measuring with the orifice flowmeter 9 and the hot gas temperature is controlled while measuring a hot gas temperature, T1, a core material temperature, T2, and an exhaust gas temperature T3. In the respective examples, the flow rate (orifice flowmeter 9) was set at 4 $m^3$/minute and the hot gas temperature (hot gas temperature T1) was set at 80° $\pm$ 2°C.

On the other hand, the respective components of the coating material compositions indicated in Table 6 and toluene serving as a solvent therefor were charged into a dissolution tank 11, followed by agitation and mixing to obtain 2.5 wt% uniform coating material solutions. The solution was transported to a spray nozzle 4, which was placed at the lower portion of the spouting column 1 and was a full cone-type fluid nozzle with an opening of 0.6 mm, at a flow rate of 0.2 kg/minute by means of a pump 6, followed by spraying over and blowing against the core material 5 being fluidized.

The spraying step commenced at the time when the core material temperature T2 of the core material 5 being fluidized arrived at a predetermined temperature, and after spraying over a predetermined time, drying for a predetermined time was carried out. At the time when the drying was completed, the blower 10 was stopped, and the coated core material 5 was discharged from a discharge port 7 provided at the lowermost portion of the spouting column 1. In this way, there were obtained coated granular pesticides of Examples 14 - 21 and Comparative Examples 12 and 13.

[Release confirmation test]

The release confirmation test of the respective coated granular pesticides obtained in the Preparatory Examples was performed. In the release confirmation test, a time (release commencing time) of after application of a coated granular pesticide into water before release of the inside core material to outside by suffering cracks in the coated granular pesticide and breaking the film is measured.

The test method was conducted in a manner as described below.

1.5 ml of water was placed in a test tube with a cap (12 mm $\times$ 72 mm), and one granule, per test tube, of each of the coated granular pesticides obtained in the foregoing Preparatory Examples was applied into a test tube, which was then capped. For each experimental treatment, 100 tubes (granules) were used. The test tubes were kept under constant conditions of a water temperature of 20°C, and the number of the coated granular pesticides being broken in relation to time was counted. Observation was made everyday over one week from the commencement of the test, followed by further observation every week. The cumulative release rate means the cumulative breakage number of the test granules. A graph was made by plotting the results of the observation while taking the cumulative release rate along the ordinate and the days after application along the abscissa (Figs. 3, 4).

In all the Examples 14 - 21, the release-suppression time/ingredient release time = 0.1 or over, revealing that they are of a typical timed-release control-type. In Examples 14 - 17, 20, 21, it has been confirmed that as the swelling force of the core material increases, the ingredient release time becomes shortened, with the tendency that the pesticidal active ingredient is permitted to be quickly released. Moreover, since the content of the thermoplastic resins is increased in Examples 17 - 19, the release-suppression time is prolonged.

From the foregoing results, when adopting such core material and coating film as used in the coated granular pesticide of the second invention, the release-suppression time and the ingredient release time can be arbitrarily controlled, enabling a sharp release control to be realized.

In the release confirmation test, breakage of a film in one granule was never observed after a lapse of 80 days in Comparative Example 12. When the core material which does not contain any water-swelling material is used as in Comparative Example 12 and a pesticide, which is a typically hardly soluble one having a water solubility as small as about 4 ppm, is employed, there is the great apprehension that the pesticidally active ingredient is left inside the film.

In Comparative Example 13 using a core material which has a swelling force of 32 ml/2 g at the time of water absorption, the release-suppression time and the ingredient release time were, respectively, no longer than 1 hour irrespective of the film being made of 100% resin. From this release characteristic, it cannot be recognized to substantially realize the timed-release control.

**Claims**

1. Pesticidal granules for coating which comprise at least one pesticidally active ingredient as its effective component and have a circularity coefficient of 0.7 or over when determined according to the following calculation equation

    circularity coefficient = $(4\pi \times$ projected area of a granule)/(profile length in a granule projection drawing)$^2$.

2. A coated granular pesticide which comprises the pesticidal granules for coating defined in Claim 1 and coated with a resin film.

3. A coated granular pesticide according to Claim 2, wherein said coated granular pesticide has a slow release function of a timed-release control-type consisting of a release-suppression time of suppressing the release of the pesticidally active ingredient over a given period after application thereof and a release time of continuing the release of the pesticidally active ingredient after lapse of the given period.

4. A coated granular pesticide mixture comprising two or more coated granular pesticides selected from the coated granular pesticides defined in Claim 2 and the coated granular pesticides defined in Claim 3.

5. A method for cultivating field corps which comprises applying the coated granular pesticide defined in Claim 2 or 3 or the coated granular pesticide mixture defined in Claim 4.

6. A coated granular pesticide of a timed-release control-type which comprises pesticidal granules having a swelling force of 1 - 30 ml/2 g on absorption of water and coated with a film comprising a thermoplastic resin as its effective component.

7. A coated granular pesticide of a timed-release control-type according to Claim 6, wherein said pesticidal granules comprises at least one pesticidally active ingredient and at least one water-swelling material.

8. A coated granular pesticide of a timed-release control-type according to Claim 7, wherein said water-swelling material consists of a clay mineral mainly composed of montmorillonite.

9. A coated granular pesticide of a timed-release control-type according to any one of claims 6 to 8, wherein said thermoplastic resin consists of an olefin resin.

10. A coated granular pesticide of a timed-release control-type according to any one of Claims 6 to 8, wherein said coating material comprises 15 wt% or below of an ethylene/vinyl acetate copolymer.

11. A coated granular pesticide of a timed-release control-type according to any one of Claims 6 to 8, wherein a water-insoluble and/or hardly soluble powder is dispersed in said coating material.

F i g . 1

31

33

32

35

34

Fig. 2

F i g . 3

Cumulative release rate (%)

Days after application (day)

Example 14
Example 15
Example 16
Example 17
Example 18
Example 19

EP 0 966 882 A1

# F i g. 4

EP 0 966 882 A1

## INTERNATIONAL SEARCH REPORT

| | International application No. |
|---|---|
| | PCT/JP98/00171 |

**A. CLASSIFICATION OF SUBJECT MATTER**

Int. Cl$^6$ A01N25/26

According to International Patent Classification (IPC) or to both national classification and IPC

**B. FIELDS SEARCHED**

Minimum documentation searched (classification system followed by classification symbols)

Int. Cl$^6$ A01N25/26

Documentation searched other than minimum documentation to the extent that such documents are included in the fields searched

Electronic data base consulted during the international search (name of data base and, where practicable, search terms used)

CA(STN), REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X,Y | JP, 5-17302, A (Asahi Chemical Industry Co., Ltd.), January 26, 1993 (26. 01. 93), Par. Nos. (0006) to (0009) (Family: none) | 1 - 11 |
| X,Y | JP, 57-126402, A (Asahi Chemical Industry Co., Ltd.), August 6, 1982 (06. 08. 82), Page 2, upper right column, line 5 to lower right column, line 2 (Family: none) | 1 - 11 |
| X,Y | JP, 2-69414, A (Air Products and Chemicals, Inc.), March 8, 1990 (08. 03. 90), Claim 1; Fig. 1 & EP, 305918, A1 | 1 - 11 |
| P,X | JP, 9-77608, A (Chisso Corp.), March 25, 1997 (25. 03. 97), Claim 1 (Family: none) | 1 - 11 |

| [X] Further documents are listed in the continuation of Box C. | [ ] See patent family annex. |
|---|---|

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| March 3, 1998 (03. 03. 98) | March 17, 1998 (17. 03. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

27

EP 0 966 882 A1

## INTERNATIONAL SEARCH REPORT

International application No.

PCT/JP98/00171

C (Continuation). DOCUMENTS CONSIDERED TO BE RELEVANT

| Category* | Citation of document, with indication, where appropriate, of the relevant passages | Relevant to claim No. |
|---|---|---|
| P,X | JP, 9-143005, A (Chisso Corp.), June 3, 1997 (03. 06. 97), Claim 1 (Family: none) | 1 - 11 |

Form PCT/ISA/210 (continuation of second sheet) (July 1992)

28